# EUROPÄISCHE PATENTANMELDUNG

(11) **EP 4 641 324 A1**
(43) Veröffentlichungstag der Anmeldung: **29.10.2025**
(21) Anmeldenummer: 24172652.0
(22) Anmeldetag: 26.04.2024
(51) Int. Cl.: G05B 19/042, G06F 11/07

(54) **VERFAHREN ZUM BETRIEB EINER STEUERBAREN MASCHINE**

(71) Anmelder: Siemens Aktiengesellschaft, 80333 München (DE)
(72) Erfinder: Falk, Rainer, 85435 Erding (DE)
(74) Vertreter: Siemens Patent Attorneys

(57) **Zusammenfassung**

Verfahren zum Betrieb einer steuerbaren Maschine (100), die umfasst: Eine zu steuernde Maschineneinheit (110) mit einem Sensor (111) und/oder einem Aktor (112); eine interne Maschinensteuereinheit (120) zur Steuerung der Maschineneinheit (110), welche in einem Normalbetrieb durch die Maschinensteuereinheit (120) mit einer ersten Maschinensteuerungsfunktion (MF1) gesteuert wird, deren Parameter (P_MF1) und/oder Steuerkommandos (C_MF1) die interne Maschinensteuereinheit (120) von einer externen Steuereinheit (200) empfängt; und einen Watchdog (130) dessen Rücksetzkommando kryptographisch abgesichert ist. Der Watchdog (130) wird in dem Normalbetrieb der Maschine (100) in vorgegebenen Zeitintervallen durch das Rücksetzkommando (AWRC) zurückgesetzt, um die Maschine im Normalbetrieb zu steuern. Bei Ausbleiben des Rücksetzkommandos (AWRC) von der ersten Maschinensteuerungsfunktion (MF1) wird in eine zweite Maschinensteuerungsfunktion (MF2) gewechselt, wobei deren Parameter (P_MF2) und/oder Steuerkommandos (C_MF2) gewählt werden, um die Maschineneinheit (110) mit einem betriebssicheren Notbetrieb zu betreiben.

## Beschreibung

Die Erfindung betrifft ein Verfahren zum Betrieb einer steuerbaren Maschine, ein Computerprogrammprodukt, sowie eine steuerbare Maschine.

Von steuerbaren Maschinen, wie z.B. führerlosen Transportsystemen (AGV, englisch: Automated Guided Vehicle), Robotern, Werkzeugmaschinen, Produktionsmaschinen, chemischen oder verfahrenstechnischen Prozesssteuerungssystemen, aber auch Energiespeichern, geht bei Fehlfunktionen oder einer absichtlich herbeigeführten Manipulation eine Gefährdung aus, welche sowohl Schaden in der Umgebung der Maschine als auch an Menschen verursachen kann. Wenn die Maschine manipuliert ist, ist eine Einwirkung auf die Maschine durch Bedienpersonal oder ein elektronisches Überwachungssystem unter Umständen nicht mehr möglich.

Die Steuerung der Maschine soll in der Zukunft mit virtualisierten Steuerungsfunktionen, z.B. virtualisierten Automatisierungsfunktionen, erfolgen, welche durch externe Steuereinheiten ausgeführt werden, die räumlich von der zu steuernden Maschine getrennt angeordnet sind. Eine Kommunikation zwischen der externen Steuereinheit und der Maschine erfolgt hierzu über eine drahtlose und leitungsgebundene Kommunikationsverbindung. Diese Architektur hat zur Folge, dass am Ort der Maschine kein Bedienpersonal mehr vorgesehen ist. Beim Auftreten eines der oben beschriebenen Probleme kann daher durch das Bedienpersonal auch nicht mehr in den Ablauf der steuerbaren Maschine, z.B. durch Stoppen der Maschine, eingegriffen werden.

Es besteht daher ein Bedarf, eine steuerbare Maschine verlässlich aus der Ferne in einen betriebssicheren Zustand versetzen zu können.

Im Umfeld von loT-Geräten ist es bekannt, so genannte kryptographisch abgesicherte Watchdogs (englisch: authenticated Watchdog) einzusetzen, wie diese in der Spezifikation " Cyber Resilient Module and Building Block Requirements", Version 1.0 vom 15.6.2022, abrufbar unter https://trustedcomputinggroup.org/wp-content/uploads/Cyber-Resilient-Module-and-Building-Block-Requirements-V1-R0.2_pub.pdf beschrieben sind. Ein authenticated Watchdog kann nur durch ein kryptographisch geschütztes Rücksetzkommando zurückgesetzt werden. Bei Ausbleiben des Rücksetzkommandos aktiviert das loT-Gerät eine Wiederherstell-Funktionalität zum Wiederherstellen einer integrierten Firmware. Dies ermöglicht es, manipulierte loT-Geräte verlässlich wieder in einen integren Zustand zu versetzen. Ein authenticated Watchdog kann auch als kryptographisch geschützter Aufmerksamkeitssignalgenerator oder als Authorized Deferral Watchdog Counter bezeichnet werden.

Bei Drohnen ist es bekannt, dass sie bei Abreißen der Verbindung zur Fernsteuerung selbstständig ein vorgegebenes Flugprogramm durchführen und z.B. zu ihrem Abflugort zurückkehren und dort landen. Von Batteriespeichern ist es bekannt, diese in einen passiven Betriebsmodus zu versetzen, wenn für eine gewisse Zeit keine Verbindung mit einem Batteriemanagement erfolgt ist.

Es ist Aufgabe der Erfindung, ein verbessertes Verfahren anzugeben, mit dem eine steuerbare Maschine auf zuverlässige Weise in einen sicheren Zustand überführt werden kann, wenn ein Fehler oder eine Manipulation auftritt. Es soll weiterhin eine steuerbare Maschine angegeben werden, welche gegenüber Fehlern oder einer Manipulation besser geschützt ist.

Diese Aufgaben werden gelöst durch ein Verfahren mit den Merkmalen des Anspruches 1, ein Computerprogrammprodukt mit den Merkmalen des Anspruches 11 sowie eine steuerbare Maschine mit den Merkmalen des Anspruches 12. Vorteilhafte Ausgestaltungen ergeben sich aus den abhängigen Ansprüchen.

Gemäß einem ersten Aspekt der Erfindung wird ein Verfahren zum Betrieb einer steuerbaren Maschine vorgeschlagen. Unter einer steuerbaren Maschine sind allgemein im Industrieumfeld eingesetzte Maschinen zu verstehen, wie z.B. führerlose Transportsysteme (AGV), Roboter, Werkzeugmaschinen, Produktionsmaschinen, chemische oder verfahrenstechnische Prozesssteuerungssysteme, aber auch Energiespeicher.

Die Maschine umfasst eine zu steuernde Maschineneinheit mit zumindest einem Sensor und/oder Aktor. Die zu steuernde Maschineneinheit kann beispielsweise ein Roboterarm, eine Antriebseinheit, ein pneumatisches System, usw. sein oder umfassen. Die Maschineneinheit kann ein oder mehrere Aktoren (z.B. Motor, pneumatischer oder elektrischer Zylinder, usw.) umfassen. Ein oder mehrere Sensoren der Maschineneinheit dienen dazu, eine Zustandsinformation über einen jeweiligen Aktor (z.B. eine aktuelle Information über einen Weg, eine Kraft, eine Geschwindigkeit, eine Drehzahl, usw.) oder eine Prozessinformation (z.B. eine aktuelle Information über einen Druck, eine Temperatur, eine Feuchtigkeit, usw.) zu erfassen und für die Steuerung als Ist-Informationen bereitzustellen.

Weiter umfasst die Maschine eine interne Maschinensteuereinheit zur Steuerung der Maschineneinheit. Die Maschineneinheit wird in einem Normalbetrieb durch die interne Maschinensteuereinheit mit einer ersten Maschinensteuerungsfunktion gesteuert, deren Parameter und/oder Steuerkommandos die interne Maschinensteuereinheit von einer externen Steuereinheit empfängt. Die externe Steuereinheit ist über eine Kommunikationsverbindung zum Übertragen von Informationen für die Steuerung und Überwachung der Maschineneinheit mit der internen Steuereinheit verbunden.

Die externe Steuereinheit ist kein integraler Bestandteil der Maschine, sondern insbesondere dazu ausgebildet eine virtualisierte Steuerungsfunktion, z.B. virtualisierten Automatisierungsfunktion, auszuführen. Die externe Steuereinheit kann ein sog. Edge-Gerät sein oder in einem, insbesondere Cloud-basierten, Rechenzentrum realisiert sein.

Parameter der Maschinensteuerungsfunktion können beispielsweise Steuer- und/oder Regelungsparameter als Sollwerte für den oder die Aktoren sein, wie z.B. eine Geschwindigkeit, eine Kraft, ein Schwellwert, eine Drehgeschwindigkeit, und dergleichen. Parameter können von der externen Steuereinheit an die interne Steuereinheit dann übertragen werden, wenn eine Änderung erwünscht ist. Von der externen Steuereinheit ausgegebene Steuerkommandos werden von der internen Steuereinheit beispielsweise zyklisch empfangen, welche an den oder die Aktoren zur Steuerung der Maschineneinheit weitergeleitet werden. Von der externen Steuereinheit ausgegebene Steuerkommandos können von der internen Steuereinheit auch ereignisgetrieben empfangen und an den oder die Aktoren zur Steuerung der Maschineneinheit weitergeleitet werden.

Die Kommunikationsverbindung kann drahtlos oder leitungsgebunden sein. Die Kommunikationsverbindung kann ein Bus-System sein. Die Kommunikationsverbindung kann proprietärer Art sein oder auf herkömmlichen Standards, wie z.B. dem IP-Protokoll, basieren.

Die Maschine umfasst als weitere Komponente einen Watchdog, dessen Rücksetzkommando kryptographisch abgesichert ist. Ein derartiger Watchdog entspricht dem aus dem Stand der Technik bekannten authenticated Watchdog und stellt eine Funktion zur Ausfallerkennung dar.

Bei dem erfindungsgemäßen Verfahren wird der Watchdog in dem Normalbetrieb der Maschine in vorgegebenen Zeitintervallen durch das kryptographisch geschützte Rücksetzkommando zurückgesetzt, um die Maschine mit der ersten Maschinensteuerungsfunktion zu steuern. Bei Ausbleiben des Rücksetzkommandos wird von der ersten Maschinensteuerungsfunktion in eine zweite Maschinensteuerungsfunktion gewechselt, wobei deren Parameter und/oder Steuerkommandos zumindest teilweise anders als die der ersten Maschinensteuerungsfunktion gewählt werden oder sind, um die Maschine mit einem betriebssicheren Notbetrieb zu betreiben.

Das erfindungsgemäße Verfahren basiert somit darauf, den Betriebsmodus der steuerbaren Maschine abhängig vom Zustand eines Watchdogs anzupassen. Dies ermöglicht, verlässlich sicherzustellen, dass die Maschine in einen betriebssicheren Zustand verbracht werden kann, wenn das kryptographisch abgesicherte Rücksetzkommando zum Zurücksetzen des Watchdogs, z.B. aufgrund eines Fehlers oder einer Manipulation, ausbleibt.

Ein Vorteil dieses Vorgehens besteht darin, dass die Maschine verlässlich aus der Ferne in einen betriebssicheren Zustand oder Betriebsmodus versetzt werden kann. Dies ist insbesondere dann von Vorteil, wenn die Maschine über eine entfernte virtualisierte Automatisierungsfunktion bzw. Steuerungsfunktion der externen Steuereinheit gesteuert wird (so genannte Software-Defined Control, Cloud-based Control).

Gemäß einer zweckmäßigen Ausgestaltung werden die Parameter und/oder Steuerkommandos der zweiten Maschinensteuerungsfunktion aus einem Speicher der internen Steuereinheit ausgelesen. Alternativ werden die Parameter und/oder Steuerkommandos der zweiten Maschinensteuerungsfunktion durch die interne Steuereinheit zur Laufzeit ermittelt. Mit anderen Worten werden die Parameter und/oder Steuerkommandos der zweiten Maschinensteuerungsfunktion nicht von der externen Steuereinheit empfangen, sondern in der zu steuernden Maschineneinheit vorgehalten oder ermittelt. Dadurch kann auch bei Manipulationen sichergestellt werden, dass ein Betriebsmoduswechsel in einen sicheren Betrieb möglich ist. Auch bei einem Fehler in der Kommunikationsverbindung ist ein Betriebsmoduswechsel in einen sicheren Betrieb sichergestellt.

Gemäß einer weiteren zweckmäßigen Ausgestaltung wird ein Timer gestartet, wenn der Watchdog abgelaufen ist, wobei abhängig von der seit dem Start des Timers vergangenen Zeit von der zweiten Maschinensteuerungsfunktion in eine dritte Maschinensteuerungsfunktion gewechselt wird. Während die Parameter und/oder Steuerkommandos der zweiten Maschinensteuerungsfunktion dazu führen können, dass der Betriebsmodus der Maschine eingeschränkt ist, in dem z.B. eine maximal zulässige Geschwindigkeit/Temperatur/Druck/Ladeleistungen oder Entladeleistung reduziert ist, kann z.B. durch die Parameter und/oder Steuerkommandos der dritten Maschinensteuerungsfunktion der Weiterbetrieb nur mit weiter eingeschränkten Funktion zugelassen werden oder der Weiterbetrieb der Maschine vollständig beendet werden. Alternativ kann durch die Parameter und/oder Steuerkommandos der dritten Maschinensteuerungsfunktion ein Weiterbetrieb der betroffenen Maschine zugelassen werden, aber ein Wiederanlauf gesperrt sein.

In diesem Zusammenhang ist es zweckmäßig, wenn der Timer in dem Watchdog gestartet wird, wobei die seit dem Start des Timers vergangene Zeit fortlaufend an die interne Steuereinheit übertragen wird. Alternativ kann der Timer in der internen Steuereinheit gestartet werden.

In einer zweckmäßigen Ausgestaltung kann auch vorgesehen sein, dass abhängig von der seit dem Start des Timers vergangenen Zeit schrittweise in mehreren Stufen die Funktionen der zu steuernden Maschine eingeschränkt werden.

Es ist weiterhin zweckmäßig, wenn der Timer an eine cyber-resiliente Steuerungsfunktion übertragen oder in dieser gestartet wird. Die cyber-resiliente Steuerungsfunktion ist Bestandteil der zu steuernden Maschine.

Es ist weiterhin zweckmäßig, wenn der Timer beendet wird, wenn der Watchdog zurückgesetzt wird. Auf diese Weise ist sichergestellt, dass ein herkömmliches Verhalten der zu steuernden Maschine erreicht wird, bei der durch zyklisches Zurücksetzen des Watchdogs ein Betrieb mit den Parametern und/oder Steuerkommandos der ersten Maschinensteuerungsfunktion erfolgt.

Eine weitere zweckmäßige Ausgestaltung sieht vor, dass der Watchdog bei Erhalt eines Notaus-Signals von einer externen, abgesicherten Fehlersteuereinheit ein Kommando an die interne Steuereinheit ausgibt, um die interne Steuereinheit zu veranlassen, die Maschineneinheit unmittelbar mit der zweiten oder dritten Maschinensteuerungsfunktion zu betreiben. Diese Ausgestaltung ermöglicht einen sofortigen Nothalt oder, bei Ausbleiben des zyklisch erhaltenen Rücksetzsignals, den Start des Timers, so dass nach Ablauf einer vorgegebenen Zeitspanne seit dem Start des Timers in die zweite oder die dritte Maschinensteuerungsfunktion gewechselt wird.

Das Notaus-Signal wird vorzugsweise in Reaktion auf eine Nutzerbedienung ausgegeben. Das Notaus-Signal kann auch automatisiert durch eine externe Integritätsüberwachungseinheit ausgegeben werden, z.B. wenn eine Manipulation erkannt wurde.

Die externe, abgesicherte Fehlersteuereinheit ist kein integraler Bestandteil der Maschine, sondern insbesondere dazu ausgebildet eine virtualisierte Steuerungsfunktion in Bezug auf eine Notaus-Situation auszuführen. Die Fehlersteuereinheit kann wie die externe Steuereinheit ein sog. Edge-Gerät sein oder in einem, insbesondere Cloud-basierten, Rechenzentrum realisiert sein.

Gemäß einem zweiten Aspekt wird ein Computerprogrammprodukt vorgeschlagen, das Befehle umfasst, die bei der Ausführung des Programms durch einen Computer diesen veranlassen, das erfindungsgemäße Verfahren gemäß einer oder mehrerer Ausgestaltungsformen auszuführen.

Gemäß einem dritten Aspekt der vorliegenden Erfindung wird eine steuerbare Maschine vorgeschlagen, die eine zu steuernde Maschineneinheit mit zumindest einem Sensor und/oder einem Aktor, eine interne Maschinensteuereinheit zur Steuerung der Maschineneinheit, wobei die Maschineneinheit in einem Normalbetrieb durch die interne Maschinensteuereinheit mit einer ersten Maschinensteuerungsfunktion gesteuert wird, deren Parameter und/oder Steuerkommandos die interne Maschinensteuereinheit von der externen Steuereinheit empfängt, die über eine Kommunikationsverbindung zum Übertragen von Informationen für die Steuerung und Überwachung der Maschineneinheit mit der internen Steuereinheit verbunden ist, und einen Watchdog, dessen Rücksetzkommando kryptographisch abgesichert ist, umfasst. Die Maschine ist dazu eingerichtet, ein Verfahren gemäß einer oder mehrerer Ausgestaltungsvarianten der Erfindung auszuführen.

Gemäß einer zweckmäßigen Ausgestaltung kann der Watchdog in die interne Maschinensteuereinheit integriert sein oder eine von dieser getrennte Komponente sein. In der zuletzt genannten Variante kann der Watchdog integraler Bestandteil der Maschine oder ein mit der Maschine gekoppeltes Bauteil sein.

Die Erfindung wird nachfolgend näher anhand eines Ausführungsbeispiels in der Zeichnung beschrieben. Es zeigen:
- Figur 1: eine schematische Darstellung einer erfindungsgemäßen steuerbaren Maschine zur Durchführung des erfindungsgemäßen Verfahrens; und
- Figur 2: eine schematische Darstellung eines Ablaufplans des erfindungsgemäßen Verfahrens.

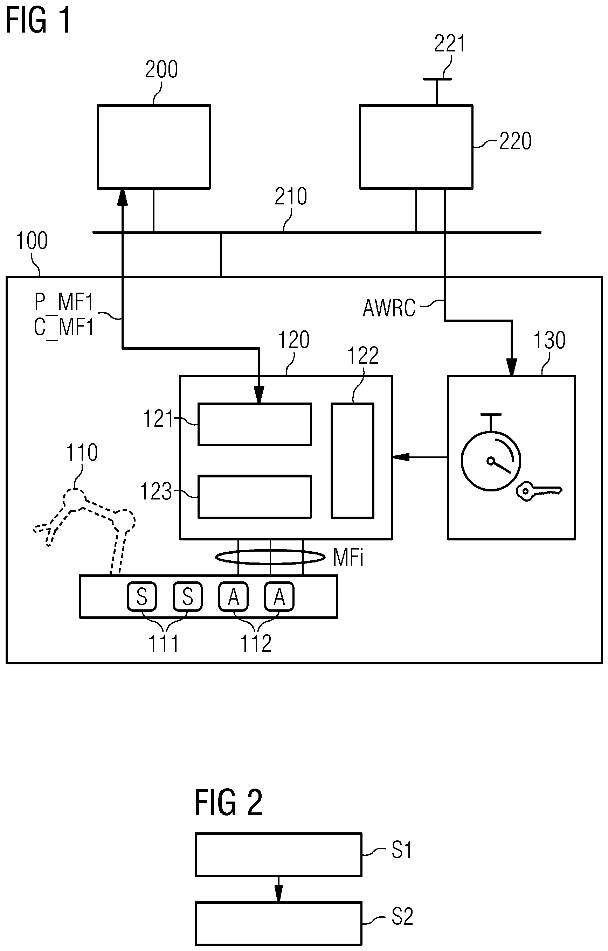

Figur 1 zeigt eine schematische Darstellung einer erfindungsgemäßen steuerbaren Maschine 100, die dazu ausgebildet ist, das nachfolgend beschriebene, erfindungsgemäße Verfahren durchzuführen. Bei der Maschine 100 handelt es sich beispielsweise um ein führerloses Transportsystem (AGV), einen Roboter, eine Werkzeugmaschine, eine Produktionsmaschine, ein chemisches oder verfahrenstechnisches Prozesssteuerungssystem, einen Energiespeicher (Batteriespeicher) und dergleichen.

Die Maschine 100 umfasst eine Maschineneinheit 110, eine interne Maschinensteuereinheit 120 und einen Watchdog 130.

Die Maschineneinheit 110 umfasst eine beliebige Anzahl an steuerbaren Elementen mit einer Anzahl an Aktoren 112, wie z.B. ein oder mehrere Motoren, ein oder mehrere Antriebsräder, einen oder mehrere pneumatische oder elektrische Aktoren, usw.. Die Maschineneinheit 110 ist im vorliegenden Ausführungsbeispiel als Roboterarm ausgebildet, der ein oder mehrere der oben genannten Elemente umfasst. Die Maschineneinheit umfasst ferner zumindest einen Sensor 111. In der schematischen Figur 1 sind beispielhaft zwei Sensoren 111 und zwei Aktoren 112 gezeigt sind. Es versteht sich, dass die Anzahl der Sensoren 111 und die Anzahl der Aktoren 112 prinzipiell beliebig gewählt sein kann. Bei den Sensoren 111 und den Aktoren 112 kann es sich um geschützte Elemente handeln, welche insbesondere dazu ausgebildet sind, empfangene Steuerparameter mit aktuell ermittelten Sensorwerten auf Konsistenz zu vergleichen.

Die interne Maschinensteuereinheit 120 umfasst eine interne Steuerungsfunktion 121, eine cyber-resiliente Steuerungsfunktion 122 sowie eine Schnittstelle 123 zur Maschineneinheit 110.

Die Maschineneinheit 110 wird durch die interne Steuerungsfunktion 121 der Maschinensteuereinheit 120 mithilfe von verschiedenen Maschinensteuerungsfunktion MFi gesteuert. Das Suffix i (i = 1 ... N) repräsentiert eine erste, eine zweite, eine dritte, ... Maschinensteuerungsfunktion. Zumindest die erste Maschinensteuerungsfunktion MF1 ist in der internen Steuerungsfunktion 121 oder einem mit dieser verbundenen, nicht dargestellten Speichereinheit hinterlegt. Ebenso können die zweite und jede weitere Maschinensteuerungsfunktion MFi (i=2... N) in der internen Steuerungsfunktion 121 oder der Speichereinheit hinterlegt sein. Die zweite und jede weitere Maschinensteuerungsfunktion MFi (i=2... N) können jedoch auch von der cyber-resilienten Steuerungsfunktion 122 an die interne Steuerungsfunktion 121 übertragen werden. In diesem Fall sind die zweite und jede weitere Maschinensteuerungsfunktion MFi (i=2... N) in einem nur durch die cyber-resilienten Steuerungsfunktion 122 erreichbaren Speicher abgelegt.

Die cyber-resiliente Steuerungsfunktion 122 ist eine vertrauenswürdige Einheit, welche in Software, insbesondere in einer speziellen vertrauenswürdigen Ausführungsumgebung (Trusted Execution Environment), oder vorzugsweise in Hardware, z.B. als Mikrocontroller oder FPGA, realisiert ist. Die cyber-resiliente Steuerungsfunktion 122 ist dazu vorgesehen, der internen Steuerungsfunktion 121 beim Auftreten bestimmter Ereignisse (Fehler und/oder detektierte Manipulationen) Parameter und/oder Steuerungskommandos zur Verfügung zu stellen, mit denen zwangsweise ein betriebssicherer Notbetrieb der Maschineneinheit 110 bewirkt wird. Hierzu ist die cyber-resiliente Steuerungsfunktion 122 dazu ausgebildet, entweder die interne Steuerungsfunktion 122 durch die Bereitstellung von geeigneten Parametern und/oder Steuerkommandos zu beeinflussen oder auch direkt die Schnittstelle 123 zu rekonfigurieren, so dass beispielsweise ein Zugriff auf bestimmte Aktoren nicht mehr möglich ist. Ebenso ist die cyber-resiliente Steuerungsfunktion 122 dazu ausgebildet, zu entscheiden, welche Maschinensteuerungsfunktion MFi (i=2... N) zum Einsatz kommen soll.

Die Schnittstelle 123 stellt eine Hardware-Schnittstelle dar, welche mit den Sensoren 111 und/oder den Aktoren 112 physikalisch verbunden ist. Die Schnittstelle 123 ist vorzugsweise konfigurierbar. Sie kann beispielsweise als SPI oder FC-Schnittstelle ausgebildet sein.

Zur Ausführung einer jeweiligen Maschinensteuerungsfunktion MFi benötigt die interne Steuerungsfunktion 121 Parameter P_MFi und/Steuerkommandos C_MFi. Abhängig davon, ob die Maschine in dem Normalbetrieb oder einem, aufgrund eines besonderen Ereignisses auszuführenden, abgesicherten Betrieb betrieben werden soll, werden die Parameter entweder von einer externen Steuereinheit 200 oder der cyber-resilienten Steuerungsfunktion 122 bereitgestellt.

In dem Normalbetrieb wird die Maschineneinheit durch die interne Steuerungsfunktion 121 mit Parametern P_MF1 und/oder Steuerkommandos C-MF1 gesteuert, die die interne Maschinensteuereinheit von der externen Steuereinheit 200 empfängt. Parameter P_MF1 sind beispielsweise Vorgabe-Werte für die Aktoren, wie z.B. eine Sollgeschwindigkeit, eine Kraft, eine Drehgeschwindigkeit, ein Druck, usw. Die Steuerkommandos C-MF1 umfassen beispielsweise Kommandos, wie z.B. einen Schwellwertvergleich, usw. Im Normalbetrieb reicht die interne Steuerungsfunktion 121 die Parameter P_MF1 und/oder Steuerkommandos C_MF1 an die Maschineneinheit 110 durch, so dass diese ihre bestimmungsgemäße Funktion übernehmen kann. Weiterhin kann die Steuerungsfunktion 121 der externen Steuereinheit 200 die über die Schnittstelle 123 von den Sensoren 111 erfassten Sensorwerte übertragen.

Die externe Steuereinheit 200 ist über eine Kommunikationsverbindung 210, z.B. eine leitungsgebundene oder drahtlose Busverbindung oder direkte Kommunikationsverbindung zum Übertragen von Informationen mit der internen Steuereinheit 120 verbunden. Die externe Steuereinheit 200 umfasst insbesondere eine virtualisierte Automatisierungsfunktion oder Steuerungsfunktion (Software-definierte Steuerung, Cloud-basierte Steuerung).

Der Watchdog 130 ist ein Watchdog, dessen Rücksetzkommando kryptographisch abgesichert ist (authenticated Watchdog). Der Watchdog wird im Normalbetrieb der Maschine 100 in vorgegebenen Zeitintervallen durch das kryptographisch abgesicherte Rücksetzkommando AWRC zurückgesetzt (Schritt S1 in Figur 2).

Bei Ausbleiben des Rücksetzkommandos AWRC von der ersten Maschinensteuerungsfunktion MF1 wird in eine zweite Maschinensteuerungsfunktion MF2 gewechselt (Schritt S2 in Figur 2). Deren Parameter P_MF2 und/oder Steuerkommandos C_MF2 werden zumindest teilweise anders als die der ersten Maschinensteuerungsfunktion MF1 gewählt, um die Maschineneinheit 110 mit einem betriebssicheren Notbetrieb zu betreiben. Beispielsweise können die Parameter P_MF2 und/oder Steuerkommandos C_MF2 so gewählt sein, dass die Geschwindigkeiten, Drücke, Kräfte usw. im Notbetrieb geringer sind als im Normalbetrieb. Dadurch kann die Gefährdung für die Maschine, deren Umfeld und auch Menschen reduziert werden.

Wie oben beschrieben, werden die Parameter P_MF2 und/oder Steuerkommandos C_MF2 der zweiten Maschinensteuerungsfunktion MF2 von der cyber-resilienten Steuerungsfunktion 122 bereitgestellt und z.B. aus einem nur dieser zugänglichen Speicher ausgelesen. Alternativ können diese durch die cyber-resiliente Steuerungsfunktion 122 zur Laufzeit ermittelt werden.

Dieses beschriebene Vorgehen ermöglicht es, verlässlich sicherzustellen, dass die Maschineneinheit 110 in einem betriebssicheren Zustand versetzt wird, wenn das kryptographisch geschützte der Rücksetzkommandos zum Zurücksetzen des Watchdogs ausbleibt. Der Watchdog 130 zum Aktivieren des betriebssicheren Notbetriebs kann Bestandteil der Maschine 100 sein oder eine mit der Maschine 100 in Verbindung stehende Zusatzkomponente.

Wenn der Watchdog 130 abgelaufen ist, wird ein weiterer Timer gestartet. Der Timer kann in dem Watchdog 130 gestartet werden. In dieser Variante wird die seit dem Start des Timers vergangene Zeit fortlaufend an die cyber-resiliente Steuerungsfunktion 122 übertragen. Alternativ kann der Timer in der internen Steuereinheit 120 und insbesondere in der cyber-resilienten Steuerungsfunktion 122 gestartet werden. Abhängig von der seit dem Start des Timers vergangenen Zeit wird von der zweiten Maschinensteuerungsfunktion MF2 in eine dritte Maschinensteuerungsfunktion MF3 gewechselt. Hierdurch kann, abhängig davon, wie lange der Watchdog 130 abgelaufen ist, d. h. wie lange das zuletzt erwartete, jedoch ausgebliebene Zurücksetzen zurückliegt, eine stufenweise Einschränkung der nutzbaren Betriebsart erreicht werden. Beispielsweise können Funktionen schrittweise gesperrt werden. Es können Betriebsparameter, wie z.B. maximale Geschwindigkeit, Temperatur, Druck, Ladeleistung eines Energiespeichers, Entladeleistung eines Energiespeichers, schrittweise eingeschränkt werden. Ebenso ist es möglich, für eine gewisse Zeitdauer einen Weiterbetrieb der betroffenen, laufenden Maschine zuzulassen, aber einen Wiederanlauf zu sperren.

Das Rücksetzkommando AWRC empfängt der Watchdog 130 von einer externen, abgesicherten Fehlersteuereinheit 220 über die Kommunikationsverbindung 210. Die externe, abgesicherte Fehlersteuereinheit 220 befindet sich, wie die externe Steuereinheit 200 an einem anderen Ort als die Maschine 100. Die Fehlersteuereinheit 220 kann ferner einen Notaus-"Schalter" 221 umfassen, der in mechanischer Weise oder als Bedienelement einer Mensch-Maschine-Schnittstelle (z.B. Icon in einer Software) realisiert sein kann. Dieser aus der Ferne ansteuerbare Notaus-Schalter ein 221 ermöglicht es, einen Notstopp der Maschine 100 auszulösen, wenn beispielsweise über einen vorgegebenen Zeitraum kein kryptographisch korrekt abgesichertes Rücksetzkommando AWRC durch den Watchdog 130 empfangen wird. Ebenso wird ein Notstopp der Maschine 100 ausgelöst, wenn der Watchdog 130 ein vorgegebenes kryptographisch geschütztes Notaus-Kommando empfängt. Hierdurch wird ein verlässlicher, von der Ferne aus ansteuerbarer Notaus-Schalter 221 realisiert. Dieser löst nicht nur bei einem gezielten Notaus-Kommando aus, sondern auch, wenn das Rücksetzkommandos AWRC für eine vorgegebene Zeitdauer nicht empfangen wird.

Es ist weiterhin bevorzugt, wenn die Kommunikationsverbindung 210 über ein Angriffserkennungssystem abgesichert ist, d. h. über ein System, mit dem es möglich ist, Angriffe auf die Kommunikation zwischen der externen Steuereinheit 200 und/oder der Fehlersteuereinheit 220 und der Maschine 100 zu detektieren. Stellt eine solche externe Integritätsüberwachungseinheit fest, dass eine Manipulation vorliegt, so erzeugt diese automatisiert ein Notaus-Signal, das als kryptographisch abgesichertes Notaus-Kommando an den Watchdog 130 übertragen wird. Die Fehlersteuereinheit 220 kann z.B. die Funktion der Integritätsüberwachungseinheit übernehmen.

Das erfindungsgemäße Vorgehen lässt sich für eine Vielzahl unterschiedlicher Anwendungen einsetzen, wobei die unten angegebenen Beispiele stellvertretend für die Maschine 100 stehen:
Werkzeugmaschine/Antrieb: Abhängig von einem aktuellen Zustand des Watchdogs kann ein Hochlauf bzw. ein Wiederanlauf einer Werkzeugmaschine oder eines Antriebs gesperrt werden. Ebenso kann ein Herunterfahren in einen betriebssicheren Zustand erfolgen. Es können Dynamikparameter, wie z.B. Geschwindigkeit, Beschleunigung, Kraft, Moment und dergleichen abhängig von einem aktuellen Zustand des Watchdogs (als Parameter und/oder Steuerparameter) von der cyber-resilienten Steuerungsfunktion zur Verarbeitung durch die entsprechende Maschinensteuerungsfunktion vorgegeben werden.
Batteriespeicher: Abhängig vom aktuellen Zustand des Watchdogs kann ein passiver Betriebsmodus aktiviert werden. Ebenso ist ein Betrieb mit reduzierten Parametern und/oder eingeschränktem Regelalgorithmus denkbar.
Autonomes Fahrzeug: Ein autonomes Fahrzeug aktiviert oder deaktiviert einen autonomen Modus, wenn der Watchdog auslöst. Es kann dann beispielsweise eine Flugroute, eine Fahrroute, ein Flugprogramm, ein Fahrprogramm oder ein Ziel abhängig vom aktuellen Zustand des Watchdogs ausgewählt werden.
Roboter: Dynamikparameter wie Geschwindigkeit, Beschleunigung, Kraft, Moment können abhängig vom aktuellen Zustand des Watchdogs eingestellt werden.

*Unabhängig vom grammatikalischen Geschlecht eines bestimmten Begriffes sind Personen mit männlicher, weiblicher oder anderer Geschlechteridentität mit umfasst.*

## Patentansprüche

1. Verfahren zum Betrieb einer steuerbaren Maschine (100), wobei die Maschine (10) folgende Komponenten umfasst:
- eine zu steuernde Maschineneinheit (110) mit zumindest einem Sensor (111) und/oder Aktor (112),
- eine interne Maschinensteuereinheit (120) zur Steuerung der Maschineneinheit (110), wobei die Maschineneinheit (110) in einem Normalbetrieb durch die interne Maschinensteuereinheit (120) mit einer ersten Maschinensteuerungsfunktion (MF1) gesteuert wird, deren Parameter (P_MF1) und/oder Steuerkommandos (C_MF1) die interne Maschinensteuereinheit (120) von einer externen Steuereinheit (200) empfängt, die über eine Kommunikationsverbindung (210) zum Übertragen von Informationen für die Steuerung und Überwachung der Maschineneinheit (110) mit der internen Steuereinheit (120) verbunden ist,
- einen Watchdog (130), dessen Rücksetzkommando kryptographisch abgesichert ist,
wobei
- der Watchdog (130) in dem Normalbetrieb der Maschine (100) in vorgegebenen Zeitintervallen durch das kryptographisch geschützte Rücksetzkommando (AWRC) zurückgesetzt wird, um die Maschine (100) mit der ersten Maschinensteuerungsfunktion (MF1) zu steuern, und
- bei Ausbleiben des Rücksetzkommandos (AWRC) von der ersten Maschinensteuerungsfunktion (MF1) in eine zweite Maschinensteuerungsfunktion (MF2) gewechselt wird, wobei deren Parameter (P_MF2) und/oder Steuerkommandos (C_MF2) zumindest teilweise anders als die der ersten Maschinensteuerungsfunktion (MF1) gewählt werden, um die Maschineneinheit (110) mit einem betriebssicheren Notbetrieb zu betreiben.

2. Verfahren nach Anspruch 1, bei dem die Parameter (P_MF2) und/oder Steuerkommandos (C_MF2) der zweiten Maschinensteuerungsfunktion (MF2) aus einem Speicher der internen Steuereinheit (120) ausgelesen werden oder durch die interne Steuereinheit (120) zur Laufzeit ermittelt werden.

3. Verfahren nach Anspruch 1 oder 2, bei dem ein Timer gestartet wird, wenn der Watchdog (130) abgelaufen ist, wobei abhängig von der seit dem Start des Timers vergangen Zeit von der zweiten Maschinensteuerungsfunktion (MF2) in eine dritte Maschinensteuerungsfunktion (MF3) gewechselt wird.

4. Verfahren nach Anspruch 3, bei dem der Timer in dem Watchdog gestartet wird, wobei die seit dem Start des Timers vergangene Zeit fortlaufend an die interne Steuereinheit (120) übertragen wird.

5. Verfahren nach Anspruch 3, bei dem der Timer in der internen Steuereinheit (120) gestartet wird.

6. Verfahren nach Anspruch 4 oder 5, bei dem der Timer an eine cyber-resiliente Steuerungsfunktion (122) übertragen oder in dieser gestartet wird.

7. Verfahren nach einem der Ansprüche 3 bis 6, bei dem der Timer beendet wird, wenn der Watchdog (130) zurückgesetzt wird.

8. Verfahren nach einem der vorhergehenden Ansprüche, bei dem der Watchdog (130) bei Erhalt eines Notaus-Signals von einer externen, abgesicherten Fehlersteuereinheit (220) ein Kommando an die interne Steuereinheit (120) ausgibt, um die interne Steuereinheit (120) zu veranlassen, die Maschineneinheit (110) unmittelbar mit der zweiten oder dritten Maschinensteuerungsfunktion (MF2, MF3) zu betreiben.

9. Verfahren nach Anspruch 8, bei dem das Notaus-Signal in Reaktion auf eine Nutzerbedienung ausgegeben wird.

10. Verfahren nach Anspruch 8 oder 9, bei dem das Notaus-Signal automatisiert durch eine externe Integritätsüberwachungseinheit ausgegeben wird, wenn eine Manipulation erkannt wurde.

11. Computerprogrammprodukt, umfassend Befehle, die bei der Ausführung des Programms durch einen Computer diesen veranlassen, die Schritte des Verfahrens nach einem der vorhergehenden Ansprüche 1 bis 10 auszuführen.

12. Steuerbare Maschine, umfassend:
- eine zu steuernde Maschineneinheit (110) mit zumindest einem Sensor (111) und/oder Aktor (112),
- eine interne Maschinensteuereinheit (120) zur Steuerung der Maschineneinheit (110), wobei die Maschineneinheit (110) in einem Normalbetrieb durch die interne Maschinensteuereinheit (120) mit einer ersten Maschinensteuerungsfunktion (MF1) gesteuert wird, deren Parameter (P_MF1) und/oder Steuerkommandos (C_MF1) die interne Maschinensteuereinheit (120) von einer externen Steuereinheit (200) empfängt, die über eine Kommunikationsverbindung (210) zum Übertragen von Informationen für die Steuerung und Überwachung der Maschineneinheit (110) mit der internen Steuereinheit (120) verbunden ist,
- einen Watchdog (130), dessen Rücksetzkommando kryptographisch abgesichert ist,
wobei die Maschine (100) dazu einrichtet ist, ein Verfahren auszuführen, bei dem
- der Watchdog (130) in dem Normalbetrieb der Maschine (100) in vorgegebenen Zeitintervallen durch das kryptographisch geschützte Rücksetzkommando (AWRC) zurückgesetzt wird, um die Maschine (100) mit der ersten Maschinensteuerungsfunktion (MF1) zu steuern, und
- bei Ausbleiben des Rücksetzkommandos (AWRC) von der ersten Maschinensteuerungsfunktion (MF1) in eine zweite Maschinensteuerungsfunktion (MF2) gewechselt wird, wobei deren Parameter (P_MF2) und/oder Steuerkommandos (C_MF2) zumindest teilweise anders als die der ersten Maschinensteuerungsfunktion (MF1) gewählt werden, um die Maschineneinheit (110) mit einem betriebssicheren Notbetrieb zu betreiben.

13. Maschine nach Anspruch 12, **dadurch gekennzeichnet, dass** diese ferner das zu eingerichtet ist, ein Verfahren gemäß einem der Ansprüche 2 bis 10 auszuführen.

14. Maschine nach Anspruch 12 oder 13, **dadurch gekennzeichnet, dass** der Watchdog (130) in die interne Maschinensteuereinheit (120) integriert oder eine von dieser getrennte Komponente ist.
